Europäisches Patentamt

European Patent Office

Office européen des brevets

(11) Veröffentlichungsnummer: **0 194 430**
**B1**

# EUROPÄISCHE PATENTSCHRIFT

(45) Veröffentlichungstag der Patentschrift :
09.11.88

(51) Int. Cl.⁴ : **B 01 D 53/36, B 01 J 8/04**

(21) Anmeldenummer : **86101034.6**

(22) Anmeldetag : **25.01.86**

(54) **Vorrichtung zum katalytischen Umsetzen von Gasen.**

(30) Priorität : 11.03.85 DE 3508553

(43) Veröffentlichungstag der Anmeldung :
17.09.86. Patentblatt 86/38

(45) Bekanntmachung des Hinweises auf die Patenterteilung : 09.11.88 Patentblatt 88/45

(84) Benannte Vertragsstaaten :
AT BE CH DE FR GB IT LI LU NL SE

(56) Entgegenhaltungen :
EP-A- 0 037 119
WO-A-85 /036 45
DE-B- 2 350 086
GB-A- 1 602 812

(73) Patentinhaber : **HÜLS AKTIENGESELLSCHAFT**
**Patentabteilung / PB 15 - Postfach 13 20**
**D-4370 Marl 1 (DE)**

(72) Erfinder : **Ludwig, Gerhard, Dr.**
**Holtweg 23**
**D-4358 Haltern 6 (DE)**

EP 0 194 430 B1

**Beschreibung**

Die Erfindung betrifft eine Vorrichtung zum katalytischen Umsetzen reaktiver Gase.

Die Erfindung bezweckt, derartige Umsetzungen wirtschaftlich durchzuführen und die dazu notwendigen Vorrichtungen zu vereinfachen.

Die Vorrichtung ist ausgerichtet insbesondere auf die katalytische Umsetzung von solchen Gasgemischen, die nur eine verhältnismäßig kleine exotherme Wärmetönung aufweisen. Bevorzugte Anwendung ist die katalytische Umsetzung von giftigen und/oder belästigenden Bestandteilen in Gasen, die in die freie Atmosphäre entlassen werden.

Die reaktiven Gasströme, die zu einer katalytischen Umsetzung fähig sind, müssen, auch wenn es sich um exotherme Reaktionen handelt, in den meisten Fällen auf eine bestimmte « Anspringtemperatur » aufgeheizt werden. Hierzu kann man nach dem Einsetzen der Reaktion die Reaktionsenthalpie nach dem katalytischen Reaktor mit Hilfe von Wärmetauschern dem umzusetzenden Eingas wieder zuführen. Wenn die Reaktionen aber nur eine kleine Temperaturerhöhung $\Delta t$ erzeugen, reicht die auf konventionellem Wege rückführbare Wärmemenge im allgemeinen nicht aus, um die Anspringtemperatur im Eingas zu erreichen. In diesen Fällen müssen beträchtliche Energiemengen von außen zugeführt werden. Will man diese prinzipiell verringern, so muß man einen unverhältnismäßig großen Aufwand für den Wärmetausch zwischen Reaktoraustritts- und Eintrittsgas treiben. Je kleiner das adiabatisch erzeugbare $\Delta t$ einer exothermen Reaktion ist, umso größer sind die konventionell erforderlichen Aufwendungen.

Vorrichtungen und Verfahren zum Durchführen exothermer katalytischer Gasreaktionen sind in großer Anzahl bekannt und werden in weitem Umfang bei industriellen Prozessen eingesetzt. Die katalytische Nachverbrennung von schädlichen oder störenden Stoffen in Abgasströmen ist im Hinblick auf die Umsetzung geringer Stoffkonzentrationen in großen Gasströmen besonders weitgehend untersucht worden.

In DE-A-23 50 086 ist eine Vorrichtung zum katalytischen Nachbehandeln der Abgase von Brennkraftmaschinen beschrieben. Die Vorrichtung soll auch im Teillastbereich mit wirtschaftlich vertretbarem Heizaufwand ein wirkungsvolles katalytisches Nachbehandeln der Abgase ermöglichen ; deshalb wird diese Vorrichtung so nahe wie möglich an den Austritt des heißen Abgases aus der Brennkraftmaschine angebaut und mit möglichst heißem Abgas beschickt. Derartige Abgase haben erfahrungsgemäß eine Temperatur, die über 300 ºC liegt. Diese Vorrichtungen arbeiten erfahrungsgemäß mit einer Gasbelastung (GHSV) von über 30 000 h$^{-1}$, und die stündlich durch die Vorrichtung strömende Gasmasse ist mindestens hundertmal so groß wie die Katalysatormasse.

In den Arbeiten von E. Wicke, Chemie-Ing.-Techn. 37, 892 ff. (1965) ; G. Padberg und E. Wicke, Chemical Eng. Science, 22, 1035 ff. (1967) und H. Koch und K. Kirchner, Dechema-Monografie, Band 75, S. 145 ff., wird das grundsätzliche Verhalten von Verbrennungsreaktionen in Katalysatorschüttungen und in Katalysatorwabenkörpern untersucht. Aus diesen Arbeiten geht hervor, daß bei Unterschreitung bestimmter Eintrittstemperaturen die Reaktion abklingt bzw. bei Überschreitung bestimmter Strömungsgeschwindigkeiten die Reaktionszone in Richtung des Gasflusses wandert und schließlich aus der Katalysatorschicht austritt. Der Umsatz sinkt in beiden Fällen auf nicht mehr brauchbare Werte oder gar auf Null ab.

Aus diesem Grunde hat man in der Vergangenheit nach möglichst aktiven Katalysatoren mit niedriger « Anspringtemperatur » gesucht und Apparate vorgeschlagen, die den permanenten Einsatz von Zusatzbrennstoff und/oder umfangreiche Einrichtungen zum Wärmetausch benötigen. Beispiele sind zu finden in Dechema-Monografie, Band 52, S. 197 bis 199 ; Dechema-Monografie, Band 75, S. 176 ; Dechema-Monografie, Band 86/1, S. 150, 151 ; Dechema-Monografie, Band 86/2, S. 474 bis 478 und Chemie-Ing.-Techn. 37, 905 bis 912 (1965).

Allen diesen Apparaten ist gemeinsam, daß der Gasstrom vor Eintritt in die Katalysatormasse durch Verbrennen von Zusatzbrennstoff auf die notwendige « Anspringtemperatur » aufgeheizt wird, und daß der Gasstrom kontinuierlich in einer Richtung die Katalysatormasse auf ihrem gesamten Querschnitt durchfließt.

Es ist auch vorgeschlagen worden, daß man sich die Wanderung der Reaktionszone zu Nutze machen kann, um mit geringem Aufwand an Einrichtungen für Wärmetausch durch periodisches Umkehren der Strömungsrichtung reaktive Gasströme mit kleinem adiabatischen $\Delta t$ weitgehend vollständig umzusetzen : G. K. Boreskov and Yu. Sh. Matros, Catal. Rev.-Sci. Eng., 25 (4), 551 bis 590 (1983).

Die apparative Lösung des Problems der Strömungsumkehr wird mit der synchronen Umstellung von mindestens zwei Ventilen erreicht. Es ist im allgemeinen sehr schwierig, bei den infrage stehenden großen Gasströmen solche Ventilumschaltungen ohne unerwünschte Störungen der Druck- oder Strömungsverhältnisse zu erreichen.

Der Erfindung liegt die Aufgabe zugrunde, eine Vorrichtung zu entwickeln, die möglichst allgemeinen für katalytische Reaktionen mit kleinem adibatischem $\Delta t$ einsetzbar ist.

Diese Aufgabe wird erfindungsgemäß gelöst mit den kennzeichnenden Merkmalen des Anspruchs 1.

Hierbei wird das durch den aufgeheizten Teil eines Wärmetauschers strömende Gas von der im Wärmetauschmaterial gespeicherten Wärme mindestens auf die Anspringtemperatur der katalytischen Umsetzung erwärmt, bevor es in die an das

Wärmetauschmaterial anschließende Katalysatormasse eintritt. In der Katalysatormasse läuft zumindest zunächst ein Teil der katalytischen Umsetzung des reaktiven Gases ab, wobei sich das Gas weiter erwärmt. Das aus der Katalysatormasse ausströmende Gas wird umgelenkt und durch andere Bereiche der Katalysatormasse geleitet, wobei das reaktive Gas praktisch vollständig katalytisch umgesetzt wird und eine relativ hohe Temperatur erreicht. Das Gas gibt einen erheblichen Teil seines Wärmeinhalts an das kältere Wärmetauschmaterial ab, durch das es anschließend geleitet wird, bevor es das Reaktionsgefäß verläßt.

Das Gas strömt im wesentlichen parallel zur Achse des mit Wärmetauschmaterial und Katalysatormasse gefüllten Gefäßes. Das einströmende Gas strömt durch einen Teilquerschnitt von Wär- metauschmaterial und Katalysatormasse, das ab- strömende Gas — nach Umlenken des Gasstromes — durch den restlichen Teilquerschnitt von Katalysatormasse und Wärmetauschmasse. Durch eine gleichförmige Drehbewegung um die Achse des Füllraumes geht der vom einströmenden Gas erreichte Teil des Füllraumes in den vom abströmenden Gas erreichten Teil ausschnittsweise periodisch ineinander über.

Im dynamisch-stationären Zustand ist bei adiabatischer Fahrweise, d. h. bei genügend guter Isolierung der gesamten Apparatur, die im Abgas abgeführte Wärmemenge gleich der durch die Reaktion erzeugte Wärmemenge, unabhängig von dem in der Katalysatormasse herrschenden Temperaturniveau.

Falls die zwischen einströmenden und abströmendem Gas ausgetauschte Wärmemenge zu gering ist, um die Anspringtemperatur aufrechtzuerhalten, kann man beispielsweise in das reakti- ve Gasgemisch zusätzlich gasförmigen Reaktiv- stoff eingeben, bevor das reaktive Gasgemisch in den Wärmetauscher eintritt. Ist dagegen die ausgetauschte Wärmemenge zu groß, kann man die Temperatur im Katalysator beispielsweise durch Zugeben von inaktivem Kühlgas in das reaktive Gasgemisch herabsetzen. Die Menge des zusätzlichen Reaktivstoffes bzw. Kühlgases ist abhängig von der niedrigsten bzw. höchsten Temperatur des Gases um Umlenkraum. Beide Gasmenge können bevorzugt von der im Umlenkraum herrschenden Mischtemperatur geregelt werden.

Die Temperatur des reaktiven Gases vor Eintritt in die Katalysatormasse ist abhängig von der Drehgeschwindigkeit, mit der die vom einströmenden und abströmenden Gas erreichten Teile des Wärmetauschmaterials und der Katalysatormasse wechselseitig ineinander übergehen. Die Drehgeschwindigkeit kann man beispielsweise mit dieser Temperatur regeln.

Die Erfindung ist beispielsweise anwendbar auf reaktive Gase, die mit Luft oxidierbare Substanzen oder die mit Ammoniak reduzierbare Stickoxide enthalten.

Als Katalysatoren können die für die vorliegende katalytische Umsetzung bewährten Stoffe gewählt werden. Als Wärmetauschmaterial dienen bevorzugt die für diesen Zweck bewährten Materialien.

Die Trennung des Reaktors in zwei oder mehr Zonen wird durch eine spezielle Abdeckhaube bewirkt, die den Eingasstrom vom Abgasstrom möglichst dichtschließend abtrennt. Die Abdeckhaube und der Füllraum sind gegeneinander drehbar angeordnet. Im allgemeinen ist es zweckmäßig, die Abdeckhaube gegen den feststehenden Füllraum zu drehen.

Durch diese Anordung wird erreicht, daß ein verhältnismäßig kalter Gasstrom zunächst auf « Anspringtemperatur » aufgeheizt wird, in der Katalysatormasse ein positives Δt bewirkt und nach Verlassen der Katalysatormasse den größten Teil seiner Wärme wieder an das Wärmespeichermaterial abgibt.

Durch die Drehbewegung der Abdeckhaube wird erreicht, daß sich die Strömungsrichtung in den Kanälen bzw. Kammern periodisch umkehrt. Durch die Geschwindigkeit der Drehbewegung, das Verhältnis von Massenstrom des reaktiven Gases zu Wärmetauscherplus Katalysatormasse, die Konzentration der im Gasstrom enthaltenen Reaktivstoffe und die Eintrittstemperatur des Gases kann erreicht werden, daß ein zum gewünschten Umsetzungsgrad erforderlicher Teil der Katalysatormasse ständig die notwendige Temperatur hat.

In Einzelfällen kann auf ein gesondertes Wärmespeichermaterial verzichtet werden, und die Katalysatormasse kann die Wärmetauschfunktion mit übernehmen.

In Fällen, in denen die Wärmeentwicklung nicht ausreicht, um die katalytische Umsetzung in Ganz zu halten, erhält die Vorrichtung einen weiteren durch ein Ventil regulierbaren Gaseingang, der die Zufuhr von Zusatzreaktivstoff — bei Verbrennungsvorgängen Brennstoff — zuläßt. In Fällen, in denen das erzeugte Δt zu groß ist, kann entweder durch ein Regelventil gesteuertes Kühlgas vor dem Reaktor in das reaktive Gasgemisch eingespeist werden, oder ein Teil der Wärme kann durch einen im Umlenkraum angebrachten Wär- metauscher abgeleitet werden. Diese Zusatzein- richtungen sowie die Drehbewegung werden zweckmäßigerweise durch ein oder mehrere Temperaturfühler am Eingang oder Ausgang der Katalysatormasse und/oder im Umlenkraum geregelt.

Im Falle der Einspeisung von Gasen in das reaktive Gasgemisch wird zweckmäßigerweise eine Mischvorrichtung zur Homogenisierung des Gasstroms vor seinem Eintritt in den Reaktor eingebaut.

Da die katalytische Umsetzung nur nach vorherigem Aufheizen der Katalysatormasse auf mindestens « Anspringtemperatur » starten kann, wird im Umlenkraum ein Brenner für flüssige oder gasförmige Brennstoffe vorgesehen. Die Luft für den Verbrennungsvorgang wird durch den Brenner selber oder durch Öffnen eines Ventils oder Schiebers im Umlenkraum zugeführt.

Die Katalysatormasse kann bei geschlossenem Gaseinlaß gleichmäßig aufgeheizt werden, entweder durch Inbetriebnahme der Drehvorrichtung oder wesentlich schneller durch Öffnen eines Kurzschlusses zwischen Eingangs- und Abgangsteil des Reaktors.

Als Katalysatormasse können allgemein bekannte aktive Massen eingesetzt werden, die wegen der im allgemeinen bestehenden Forderung nach einem relativ geringen Differenzdruck aus grobkörnigen Extrudaten, Tabletten, unregelmäßigen Körnern oder Kugeln bestehen. In Fällen, in denen ein möglichst geringer Differenzdruck zwischen Eingang und Ausgang des Reaktors gefordert wird, werden aus aktivem Material hergestellte oder mit aktivem Material beschichtete oder getränkte Wabenrohrkörper eingesetzt.

Das Wärmespeichermaterial kann ähnliche Formen wie die Katalysatormasse aufweisen. Bei Katalysatormassen in Form von Wabenkörpern werden zweckmäßigerweise für regenerativen Wärmetausch entwickelte Blechpakete eingesetzt. Beim Einsatz der Vorrichtung für Reaktionen mit sehr kleinem Δt wird zweckmäßigerweise eine gute Wärmeisolierung angebracht.

Die erfindungsgemäße Vorrichtung kann verwendet werden, um Gasphasenreaktionen mit exothermem Δt von weniger als 150 Grad, bevorzugt 5 bis 100 Grad, durchzuführen.

Beispielsweise können neben Oxidationsreaktionen auch Reduktionen, Hydrierungen, Halogenierungen, Aminierungen und ähnliche katalytische Umsetzungen durchgeführt werden. Insbesondere sei erwähnt, daß auch Stickoxide in den Rauchgasen von Kraftwerken, und dies insbesondere im kalten Teil nach dem Entfernen von Schwefeldioxid, katalytisch umgesetzt werden können.

Als Hauptanwendungsgebiet ist die katalytische Nachverbrennung von giftigen und/oder störenden Abgasen anzusehen, die nach Gesichtspunkten des Umweltschutzes möglichst aus der Atmosphäre ferngehalten werden sollen, z. B. Abgase von chemischen Prozessen, bei Beschichtungsverfahren, in Druckereien, bei der Reifenproduktion, in der Nahrungsmittelindustrie, bei der Ledergerbung, bei der Textilreinigung, in der biologischen Abwasserbehandlung, bei der Tierzucht, bei der Müllaufarbeitung, bei der Tierkadaververwertung.

Die erfindungsgemäße Vorrichtung bietet folgende Vorteile :

— Relativ einfacher Aufbau eines allgemein für schwach exotherme katalytische Gasreaktionen einsetzbaren Reaktors.

— Kleine Abmessung eines einzigen regenerativen Wärmetauschers, der sich mit der Katalysatormasse in einem Gehäuse befindet.

— Im Hauptgasstrom ventillose Einrichtung, die es gestattet, ohne Unterbrechung des Gasdurchflusses allein mit der Drehung der Abdeckhaube gegen den Füllraum die Richtung der Strömung umzukehren.

Damit wird erreicht, daß

— unter optimaler Ausnutzung der Reaktionswärme die Reaktionen auf einem hinreichend hohen Temperaturniveau ablaufen können, wodurch nur ein Minimum an Katalysatormasse benötigt wird,

— auch weniger aktive und wirtschaftlichere Katalysatorkomponenten benutzt werden können,

— bei sehr kleiner Wärmetönung ein Minimum an Fremdenergie zugeführt werden muß, oder

— bei größerer Wärmetönung ein Maximum an Wärmeenergie gewonnen werden kann,

— in vielen Fällen, insbesondere bei Verbrennungsvorgangen, Ablagerungen auf dem Katalysator vermieden werden.

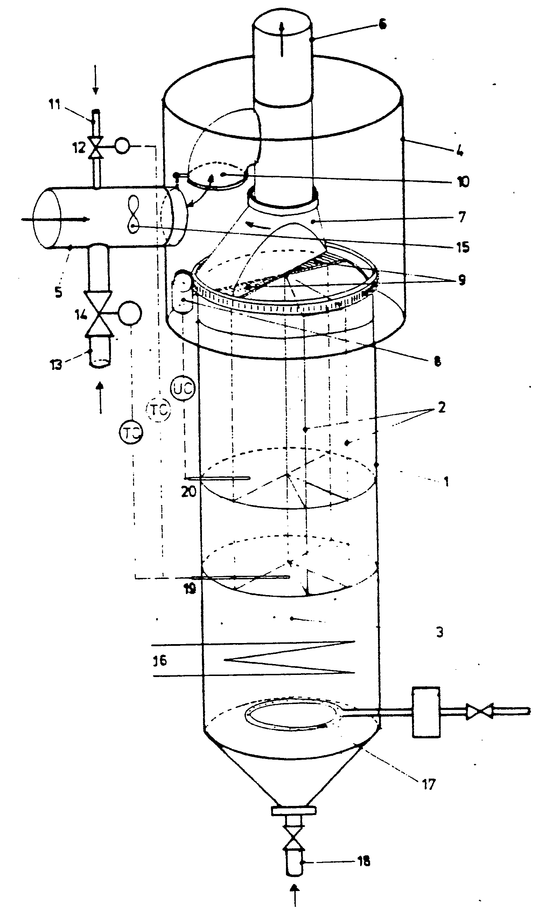

In der beigefügten Figur ist ein Ausführungsbeispiel der erfindungsgemäßen Vorrichtung wiedergegeben.

Das vertikal angeordnete Gefäß 1 ist durch mehrere Bleche 2 — von denen nur zwei Bleche eingezeichnet sind — in mehrere Zylinderausschnitte geteilt. Diese Bleche reichen von der Achse bis zur Wand des Gefäßes und etwa von der oberen Stirnseite bis in den unteren Teil des Gefäßes, jedoch nicht bis zum Gefäßboden. Am unteren Ende der Bleche ist ein — nicht gezeichnetes — stabiles Drahtnetz horizontal angebracht, unterhalb dessen sich der Umlenkraum 3 befindet.

Der Raum zwischen Drahtnetz und oberer Stirnseite des Gefäßes ist der Füllraum, der im unteren Teil mit Katalysatormasse, im oberen Teil mit Wärmetauschmaterial gefüllt ist.

Über die obere Stirnseite des Gefäßes 1 ragt ein weiterer Zylinder 4 hinaus, in den die Eingas-Leitung 5 mündet und aus dem die Abgas-Leitung 6 herausführt ; letztere ist auf der Achse des Gefäßes 1 angebracht. Zwischen der Abgasleitung 6 und der oberen Stirnseite des Gefäßes 1 befindet sich die Abdeckhaube 7 mit ihrem Antrieb 8. Diese Haube ist gegen das Abgasrohr 6 und gegen das Gefäß 1 drehbar. Die Haube ist gegen das Abgasrohr und gegen das Gefäß abgedichtet ; sie verbindet etwa die eine Hälfte des Gefäßes 1 mit der Abgas-Leitung, während etwa die andere Hälfte des Gefäßes gegen die Eingas-Leitung 5 offen ist. Unterhalb der diametralen Kante der Abdeckhaube sind zwei kreisausschnittförmige Abdeckbleche 9 angebracht, die zwei einander gegenüberliegende Kreisausschnitte abdecken ; damit sind Eingas-Raum und Abgas-Raum gegeneinander abgedichtet, wenn die Haube rotiert.

Innerhalb des Zylinders 4 befindet sich die Ventilklappe 10, die in der gezeichneten Stellung das Ende der Eingas-Leitung 5 freigibt und das Ende des Kurzschlusses zwischen Eingas-Raum und Abgas-Leitung 6 verschließt. In ihrer anderen Stellung verschließt diese Klappe 10 das Ende der Eingas-Leitung, wodurch ein Kurzschluß zwischen Eingas-Raum und Abgas-Leitung hergestellt wird.

An der Eingas-Leitung 5 ist die Leitung 11 mit Regelventil 12 zum Einleiten von Zusatz-Reaktivstoff angebracht sowie die Leitung 13 mit Regelventil 14 zum Einleiten von Kühlgas. Zwischen diesen Anschlußstellen und dem Ende der Eingas-Leitung befindet sich eine Mischvorrichtung 15.

Im Umlenkraum 3 sind ein Wärmetauscher 16 (für fluiden Wärmeträger) sowie ein Aufheizbrenner 17 angebracht. Außerdem ist die absperrbare Leitung 18 vorhanden, durch die Luft in den Umlenkraum eintreten kann.

Im Umlenkraum ist ein Temperaturfühler 19 angebracht, der mit den Ventilen 12 und 14 verbunden ist. Er erfaßt die sich im Umlenkraum 3 einstellende Mischtemperatur. In einem Zylinderausschnitt in der Umgebung der Übergangsstelle zwischen Katalysatormasse und Wärmespeichermaterial ist ein Temperaturfühler 20 angebracht, der mit dem Haubenantrieb 8 verbunden ist.

Um die Vorrichtung in Betrieb zu nehmen, wird zunächst mit der Ventilklappe 10 die Eingas-Leitung abgesperrt und der Eingas-Raum mit der Abgas-Leitung kurzgeschlossen. Die Katalysatormasse und das Wärmetauschermaterial werden mittels des gezündeten Aufheizbrenners 17 erhitzt. Die dazu notwendige Verbrennungsluft wird mittels der geöffneten Leitung 18 in den Umlenkraum geleitet. Der Aufheizvorgang ist abgeschlossen, sobald der Temperaturfühler 20 die vorgeschriebene Temperatur erreicht hat. Dann wird der Aufheizbrenner abgestellt, die Leitung 18 wird abgesperrt und die Ventilklappe 10 wird umgestellt, wodurch der Kurzschluß zwischen Eingas-Raum und Abgas-Leitung aufgehoben und die Eingas-Leitung zum Eingas-Raum geöffnet wird. Die Ventilklappe 10, der Aufheizbrenner 17 und die Leitung 18 werden für den anschließenden Betrieb der Vorrichtung nicht benötigt.

Nun wird der Antrieb für die Abdeckhaube eingeschaltet und das reaktive Gemisch in das Gefäß eingeleitet ; die katalytische Umsetzung beginnt sofort.

Die erfindungsgemäße Vorrichtung ist in den folgenden Beispielen weiter erläutert.

Beispiel 1

Reaktor mit zylindrischem Querschnitt und geschütteter Füllung

Ein senkrecht aufgestellter Reaktor gemäß Figur hat ein Gesamtfüllvolumen von 1,5 m³. Der Füllraum mit einem Durchmesser von 1 250 mm und einer Höhe von 1,3 m ist durch eingeschweißte Blechwände in 12 gleichgroße Zylinderausschnitte aufgeteilt. Am unteren Ende des Füllraumes befindet sich ein Drahtsieb, das auf einem Metallrost liegt. Der Füllraum ist in der unteren Hälfte mit Katalysatormasse gefüllt. Diese besteht aus zylindrischen Körnern von 6 mm Durchmesser und 8 bis 12 mm Länge und enthält 12 % CuO und 1 % Cr₂O₃ auf Aluminiumoxid als Trägermaterial. Der restliche Füllraum enthält Kieselsteine der Körnung 10 bis 20 mm.

Beispiel 2

Reaktor mit quadratischem Querschnitt und gepackter Füllung

Der Reaktor hat einen quadratischen Querschnitt mit ca. 1,00 m Seitenlänge und eine Füllraumhöhe von 12,50 m. Er ist auf der gesamten Länge in zehn im Querschnitt 0,50 m × 0,20 m große Kammern aufgeteilt. Im oberen Teil verjüngt sich das Gefäß zu einem Zylinder. Der weitere Aufbau des Reaktors entspricht der Figur.

Der zylindrische obere Reaktorteil ist durch achsiale Trennwände in zehn Sektoren aufgeteilt, von denen jeder mit einer der beschriebenen Kammern verbunden ist. Im unteren Teil sind die Kammern mit keramischen Wabenkatalysatoren bis zu einer Höhe von 2,50 m gefüllt, die auf einem Gitterrost ruhen. Der füllmaterialfreie Umlenkraum enthält einen Brenner und eine verschließbare Luftzuführung. Der wabenförmige Katalysator besteht im wesentlichen aus $V_2O_5$, $WO_3$, $TiO_2$, einem tonhaltigen Bindemittel und CuO.

In allen Kammern sind oberhalb der Katalysatormasse Temperaturfühler angebracht, die bis zur Mitte des Kammerquerschnitts reichen.

Oberhalb der Katalysatormasse sind 10 m hoch Blechpakete mit 0,5 mm Blechdicke eingebaut, wie sie in regenerativen Wärmetauschern zur Luftvorwärmung beispielsweise im Rauchgaskanal von Kraftwerken (sog. LUVOS) benutzt werden. Ihre Warmetauschfläche beträgt 210 m²/m³.

Beispiel 3

Katalytisches Umsetzen von Benzol und Ethylbenzol in Abluft

Ein Reaktor gemäß Beispiel 1 wird nach dem in der Beschreibung der Figur angegebenen Verfahren aufgeheizt, bis der Temperaturfühler 20 die Temperatur von 350 °C anzeigt. Durch den vorgewärmten Reaktor werden — nach Umschaltung — stündlich 1 400 m³ Abluft aus einer Chemieanlage geleitet. Die Gastemperatur vor Eintritt in den Reaktor ist 25 °C. Das Gas enthält 500 vppm Benzol und 100 vppm Ethylbenzol.

Die Abdeckhaube wird zunächst mit ca. 4 Umdrehungen pro Stunde gedreht. Nach 15 bis 20 Umdrehungen stellt sich ein quasistationärer Zustand ein, der durch eine im Rhythmus der Umdrehungen schwankende Temperatur von 300 bis 370 °C am Temperaturfühler 20 und eine Temperatur von ca. 530 °C am Temperaturfühler 19 gekennzeichnet ist.

Die Umdrehungszahl der Abdeckhaube wird langsam auf 2,3 pro Stunde herabgesetzt. Die Temperatur am Fühler 20 schwankt jetzt zwischen 250 und 400 °C, und am Fühler 19 werden 480 °C angezeigt.

Das den Reaktor verlassende Gas enthält weniger als 5 vppm Benzol und Ethylbenzol.

Beispiel 4

Katalytisches Umsetzen von Stickoxiden in Abgas

Ein Reaktor nach Beispiel 2 wird zum Denitrosieren von Abgas eingesetzt.

Der Katalysator wird mit dem Gasbrenner im Umlenkraum auf eine Temperatur von 350 bis 400 °C am Temperaturfühler 20 vorgeheizt. 10 000 m³ₙ pro Stunde Abgas eines Steinkohlekraftwerkes nach einer Entschwefelungsanlage mit einer Temperatur von 60 °C und einem Gehalt von 1 200 mg $NO_x/m^3_n$ (gerechnet als $NO_2$) werden mit der stöchiometrischen Menge Ammoniak vermischt und durch den vorgeheizten Reaktor geleitet. Die Abdeckhaube wird auf eine Umdrehungszahl von 60 pro Stunde gebracht.

Mit dem Temperaturfühlersatz vor der Katalysatormasse wird die Einspeisung von Erdgas in die Eingas-Leitung so geregelt, daß keiner der Temperaturfühler weniger als 300 °C anzeigt. Die Zuspeisung von Erdgas wird gedrosselt, wenn die Temperatur im Umlenkraum 400 °C überschreitet. Dabei hat diese maximale Grenztemperatur im Umlenkraum die übergeordnete Regelfunktion.

Nach 5 Stunden hat sich ein quasi-stationärer Zustand eingestellt. Die Temperatur an den zehn Temperaturfühlern 20 schwankt zwischen 300 und 330 °C, und am Temperaturfühler 19 im Umlenkraum werden 390 bis 395 °C gemessen. Die Zuspeisung von Erdgas in den reaktiven Gasstrom vor Eintritt in den Reaktor stellt sich auf weniger als 0,1 Vol.-%, bezogen auf den Gesamtstrom, ein.

Mehr als 90 % des $NO_x$ werden zu Stickstoff und Wasser umgesetzt.

Beispiel 5

Deodorieren der Abluft aus einem Stall

Der gleiche Reaktor wie in Beispiel 1 wird benutzt, um die geruchsintensive Abluft aus einem Stall, in dem 200 Schweine gemästet werden, zu deodorieren. Der Reaktor wird nach dem in der Beschreibung der Figur angegebenen Verfahren aufgeheizt, bis der Temperaturfühler 20 etwa 400 °C anzeigt. Dem Gasstrom von stündlich 1 100 m³ Abluft wird vor dem Ansaugventilator 0,05 Vol.-% Propan zugemischt.

Im Gleichgewichtszustand schwankt bei 4,5 Umdrehungen pro Stunde die Temperatur am Fühler 20 zwischen 210 und 420 °C, während der Temperaturfühler 19 etwa 470 °C anzeigt. Die so gereinigte Abluft ist nahezu geruchsfrei.

**Patentansprüche**

1. Vorrichtung zum katalytischen Umsetzen von reaktiven Gasen, deren Temperatur unter 100 °C, bevorzugt unter 50 °C liegt, und die bei vollständiger adiabatischer Umsetzung in der Gasphase eine Temperaturerhöhung von weniger als 100 °C, bevorzugt weniger als 50 °C erzeugen, gekennzeichnet durch

— ein Gefäß (1) mit einer kreisförmigen Stirnfläche an einem Ende,

— das in einem Teil seiner Länge auf dem gesamten Querschnitt Wärmespeichermaterial enthält, und

— das im anderen Teil seiner Länge ebenfalls auf dem gesamten Querschnitt Katalysatormasse enthält, wobei

— das Wärmespeichermaterial und die Katalysatormasse in Kanäle eingebaut oder von Kanälen durchzogen sind, die von einem zum anderen Ende des Füllraumes reichen,

— eine Abdeck-Vorrichtung (7) an der kreisförmigen Stirnfläche des Füllraumes, mittels derer einströmendes reaktives Gas in einen Teil der Kanäle eingeleitet wird, und mittels derer aus dem anderen Teil der Kanäle austretendes Gas aus dem Gefäß abgeleitet wird, wobei

— die Abdeck-Vorrichtung (7) gegenüber dem stationär angeordneten Wärmespeichermaterial und der stationär angeordneten Katalysatormasse drehbar ist, und

— einen Umlenkraum (3) innerhalb des Gefäßes am anderen Ende des Füllraumes am Ende der Katalysatormasse.

2. Vorrichtung nach Anspruch 1, gekennzeichnet durch

— mindestens einen Temperaturfühler (20), der an mindestens einer Stelle in der Umgebung des Überganges von Wärmespeichermaterial zu Katalysatormasse angebracht ist,

— einen Temperaturfühler (19), der im Umlenkraum (3) am Ende der Katalysatormasse angebracht ist.

3. Vorrichtung nach den Ansprüchen 1 und 2, gekennzeichnet durch

— einen Rohrumschluß mittels der Klappe (10) zwischen Eingas-Raum und Abgas-Raum.

**Claims**

1. A device for catalytically converting reactive gases, the temperature of which is below 100 °C, preferably below 50 °C, and which, at complete adiabatic conversion in the gas phase, produce a temperature rise of less than 100 °C, preferably less than 50 °C, characterised by

— a vessel (1) having a circular end face at one end,

— which contains heat storage material over the entire cross-section in one part of its length and

— which contains catalyst mass in the other part of its length, likewise over the entire cross-section,

— the heat storage material and the catalyst mass being incorporated in channels or being penetrated by channels, which channels extend from one end of the packed space to the other,

— a cover device (7) on the circular end face of the packed space, by means of which reactive gas flowing in is passed into one part of the channels and by means of which gas emerging from the other part of the channels is discharged out of the vessel,

— the cover device (7) being rotatable relative to the heat storage material which is in a fixed arrangement and relative to the catalyst mass which is in a fixed arrangement, and

— a deflection space (3) within the vessel at the other end of the packed space at the end of the catalyst mass.

2. A device as claimed in claim 1, characterised by

— at least one temperature sensor (20) which is fitted at at least one point in the vicinity of the transition from the heat storage material to the catalyst mass, and

— a temperature sensor (19) which is fitted in the deflection space (3) at the end of the catalyst mass.

3. A device as claimed in claim 1 or 2, characterised

— by a pipe by-pass by means of the flap (10) between the inlet gas space and the outlet gas space.

**Revendications**

1. Dispositif de conversion catalytique de gaz réactifs dont la température est inférieure à 100 °C, de préférence inférieure à 50 °C, et qui produisent, dans une conversion totalement adiabatique en phase gazeuse, une élévation de température de moins de 100 °C, de préférence de moins de 50 °C, caractérisé par :

— un récipient (1) présentant une surface frontale circulaire à une extrémité,

— qui renferme une matière accumulatrice de chaleur sur toute sa section, sur une partie de sa longueur et

— qui renferme une masse catalytique dans l'autre partie de sa longueur, également sur toute sa section,

— la matière accumulatrice de chaleur et la masse catalytique étant logées dans des canaux ou traversées par des canaux qui s'étendent de l'une à l'autre des extrémités du volume de remplissage,

— un dispositif de fermeture (7) placé au droit de la surface frontale circulaire du volume de remplissage, au moyen duquel un gaz réactif entrant est introduit dans une partie des canaux et au moyen duquel le gaz sortant de l'autre partie des canaux est évacué hors du récipient,

— le dispositif de fermeture (7) pouvant tourner par rapport à la matière accumulatrice de chaleur disposée en position fixe et par rapport à la masse catalytique disposée en position fixe, et

— une chambre de renvoi (3) prévue à l'intérieur du récipient, à l'autre extrémité du volume de remplissage, à l'extrémité de la masse catalytique.

2. Dispositif selon la revendication 1, caractérisé par :

— au moins un capteur de température (20) qui est agencé en au moins un point voisin de la transition entre la matière accumulatrice de chaleur et la masse catalytique, et

— un capteur de température (19) qui est logé dans la chambre de renvoi (30), à l'extrémité de la masse catalytique.

3. Dispositif selon les revendications 1 et 2, caractérisé par :

— un dispositif d'établissement et de suppression du court-circuit entre la chambre de gaz entrant et la chambre de gaz sortant, qui opère au moyen du volet (10).